# EUROPEAN PATENT APPLICATION

(11) **EP 1 357 706 A1**
(43) Date of publication of application: **29.10.2003**
(21) Application number: 03101069.7
(22) Date of filing: 17.04.2003
(51) Int. Cl.: H04L 12/28, H04L 12/403

(54) **Group polling and reservation requests in a wireless network**

(30) Priority: 23.04.2002 US 374660 P; 27.11.2002 US 306488
(71) Applicant: Texas Instruments Incorporated, Dallas, Texas 75251 (US)
(72) Inventor: Ho, Jin-Meng, Plano, TX 75025 (US); Schrum, Sidney B., Durham, NC 27713 (US)
(74) Representative: Holt, Michael

(57) **Abstract**

A wireless network (100) comprises at least one access point (104) and a plurality of wireless stations (102) which may communicate with the access point. The access point (104) generates and transmits a first frame (120) to the wireless stations. The first frame (120) defines a time interval (124) during which each of the wireless stations having data for transmission may attempt to send a second frame (126). The second frame (126) informs the access point (104) of the traffic categories or streams the data belongs to and the time amounts needed to transmit the data belonging to the indicated traffic categories or traffic streams. The time interval (124) thus defines a pre-designated time window during which only second frames (126) used to request transmission times for buffered data may be sent by wireless stations (102). The access point (104) then may grant transmission times to those wireless stations (102) that have indicated that they have data to transmit to transmit their data in a controlled fashion. The first frame (120) also defines a contention window from which the transmission times of second frames (126) are derived, randomized, and optimized. The first frame (120) may further contain information about the wireless stations (102) from which the second frames (126) were correctly received by the access point (104) in the previous time interval during which second frames were sent.

## Description

### FIELD OF THE INVENTION

The present invention generally relates to communication networks. More particularly, the invention generally relates to the use of a reservation polling interval in a wireless network to reduce the potential for collisions and increase network throughput.

### BACKGROUND OF THE INVENTION

A wireless network may include multiple stations that communicate with one another via a wireless medium. "Access points" may be used to provide wireless stations a communication path to the network's infrastructure such as servers, storage devices, etc. In a wireless network, it is generally desirable for multiple stations within range of each other to avoid communicating (i.e., wirelessly transmitting data frames) at the same time. Simultaneous communications may result in "collisions" in which one or more stations or access points may receive multiple simultaneous transmissions that interfere with each other, thereby preventing the correct reception and decoding of the transmissions. Any improvement to wireless network operation in this regard would be highly desirable.

### SUMMARY OF THE INVENTION

In accordance with various embodiments of the invention, a wireless network comprises at least one access point and a plurality of wireless stations which may communicate with the access point. The access point generates and broadcasts a first frame (called, without limitation, a "request polling frame" herein) to the wireless stations. The first frame defines a time interval during which each of the wireless stations having data for transmission may attempt to send a second frame (called a "request reservation frame" herein). The second frame informs the access point of the traffic categories or traffic streams the data belongs to and the time amounts needed to transmit the data belonging to the indicated traffic categories or traffic streams. The time interval thus defines a pre-designated time window during which only second frames used to request transmission times for buffered data may be sent by wireless stations. The access point then may grant transmission times to those wireless stations that have indicated that they have data to transmit to transmit their data in a controlled fashion. The access point then may request, or otherwise cause, those wireless stations that have indicated that they have data to transmit to transmit their data in a coordinated fashion. The first frame also defines a contention window from which the transmission times of second frames are derived, randomized, and optimized. The first frame may further contain information about the wireless stations from which the second frames were correctly received by the access point in the previous time interval during which second frames were sent.

### BRIEF DESCRIPTION OF THE DRAWINGS

For a detailed description of the preferred embodiments of the invention, reference will now be made to the accompanying drawings in which:
Figure 1 illustrates a wireless network;
Figure 2 shows a block diagram of a wireless device;
Figure 3 illustrates the use of request polling and request reservation frames in accordance with a preferred embodiment of the invention;
Figure 4 shows a request polling frame in accordance with a preferred embodiment of the invention; and
Figure 5 shows a request reservation frame in accordance with a preferred embodiment of the invention.

### Notation and Nomenclature

Certain terms are used throughout the following description and claims to refer to particular system components. As one skilled in the art will appreciate, different companies may refer to a component and sub-components by different names. This document does not intend to distinguish between components that differ in name but not function. In the following discussion and in the claims, the terms "including" and "comprising" are used in an open-ended fashion, and thus should be interpreted to mean "including, but not limited to...". Also, the term "couple" or "couples" is intended to mean either a direct or indirect electrical connection. Thus, if a first device couples to a second device, that connection may be through a direct electrical connection, or through an indirect electrical connection via other devices and connections. The term "wireless device" refers to any device capable of wireless communicating with another device. A wireless device may comprise an access point, a wireless station associated with an access point, or other types of devices. To the extent that any term is not specially defined in this specification, the intent is that the term is to be given its plain and ordinary meaning.

### DESCRIPTION OF SPECIFIC EMBODIMENTS OF THE INVENTION

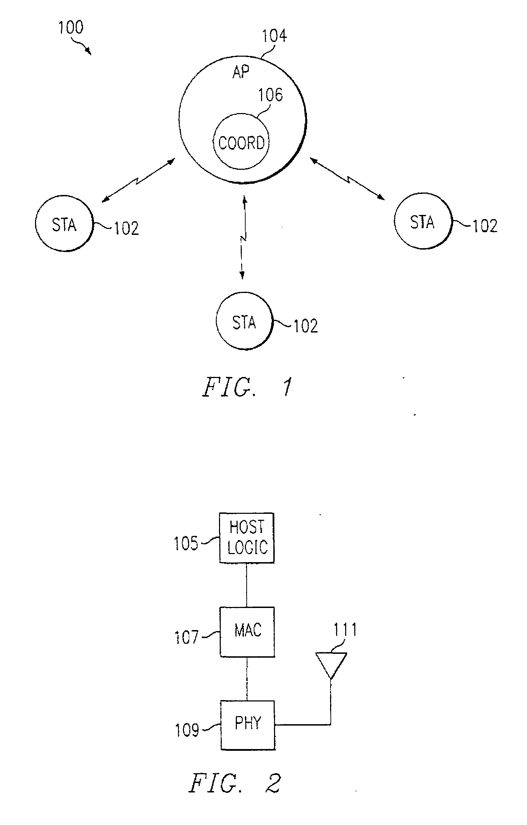

Referring now to Figure 1, a wireless network 100 is shown in accordance with a preferred embodiment of the invention. Network 100 includes one or more stations 102 wirelessly coupled to one or more access points 104. The access point 104 includes a coordinator 106 which preferably performs at least some of the functionality described herein. Although wireless communication links are depicted between the access point 104 and the various stations 102, inter-station communications are possible as well. Although not shown, it should be understood that the access point 104 couples, preferably by way of electrical cables, to computer system devices such as servers, storage devices, network switches, etc. Further, in accordance with the preferred embodiment, the wireless network 100 comports with one or more of the IEEE 802.11 specifications (e.g., 802.11a, 802.11b, 802.11e, etc.). However, this disclosure is not limited to any of the 802.11 family of specifications and more broadly can be extended to other wireless protocols and standards as desired.

Figure 2 illustrates an embodiment of an access point 104 or a wireless station 102. Each wireless device may contain host logic 105 coupled to a medium access control ("MAC") layer 107 and a physical (PHY) layer 109. The MAC layer 107 provides a variety of functions and services to facilitate effective wireless communications between wireless devices. Examples of such services include data frame transmission and reception, security, and others. The host logic 105 may use these services to effectuate communications across the wireless medium. The PHY layer 109 provides an interface between the MAC layer 107 and the wireless medium and, as such, couples to one or more antennas 111.

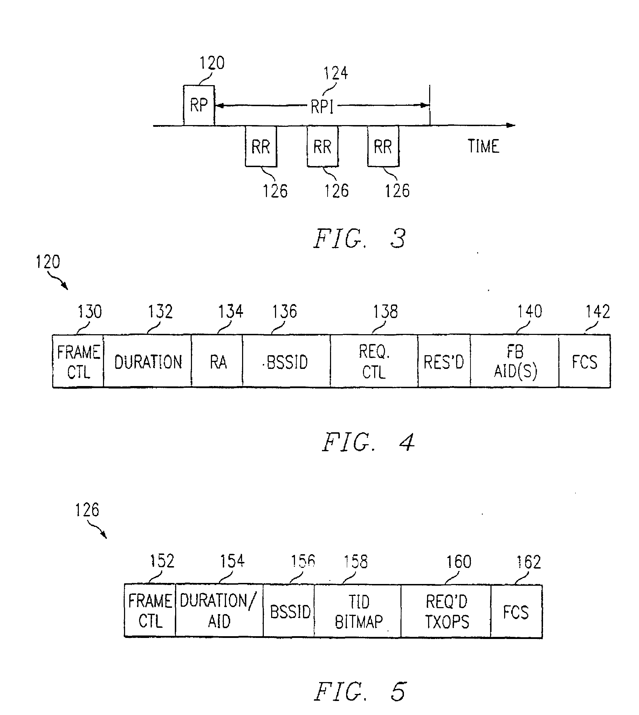

Figure 3 illustrates the operation of the preferred embodiment of the invention. As shown, a device (e.g., an access point 104) issues a first frame 120 via the wireless medium. The first frame 120 preferably defines a time interval 124 during which time one or more second frames 126, but preferably not other frames, may be provided by other devices (e.g., the wireless stations 102) in the network 100. Without limitation, the first frame 120 is called a request polling ("RP") frame for purposes of this disclosure. The second frames 126 are referred to as request reservation ("RR") frames, while the time interval 124 is referred to as a request polling interval ("RPI"). The RR frames 126 inform the access point 104 that a station 102 contains data frames it desires to transmit over the wireless medium. This permits the access point to know which, if any, stations have data to transmit, and what quality of service requirements are associated with those data, without having to poll every device in the network. Also, by defining a specific time window for stations to transmit their RR frames, the potential for collision and, if collision does occur, the time wasted on collision are reduced as compared to permitting stations to attempt a data transmission at any time during system operation, since the RR frames generally occur less frequently and are generally smaller in length than data frames. Consequently, channel utilization is improved and service delay is reduced.

Figure 4 shows a preferred embodiment of the RP frame 120. The embodiment of the RP frame in Figure 4 generally comports with the IEEE 802.11e in terms of format of the various MAC frames. Some of the fields are defined in the IEEE 802.11-1999 standard entitled "ISO/IEC 8802-11 International Standard ANSI/IEEE Std 802.11". The RP frame of the preferred embodiment includes fields 130-142, although additional and/or different fields may be included as desired. Field 130 comprises a frame control field which specifies, among other things, the type and subtype of the frame. This information is encoded to identify frame 120 as an RP frame. The RA field 134 comprises a broadcast address to which the RP frame is to be transmitted, while the BSSID field 136 comprises the address of the AP 104. The request control field 138 defines a contention window that applies to the transmission of RR frames 126 in the RPI 124, as will be explained below. The request control field 138 further defines what preamble is to be used in sending RR frames. The frame check sequence ("FCS") field 142 preferably enables error detection as is described, for example, in the IEEE 802.11 specification.

The duration field 132 preferably defines or otherwise indicates the time duration of the RPI 124. The time duration of RPI may be specified in units of time (e.g., microseconds). The duration field 132 may be of any desired length (e.g., 16 bits) and a value of 1 may define an RPI of 1 microsecond, 2 may define an RPI of 2 microseconds, and so on. The minimum value of the RPI preferably may be the minimum time needed to transmit a single RR frame plus an appropriate inter-frame space between the RP and RR frame. In some embodiments, the RP frame 120 is not used to define an RPI 124 and instead provides acknowledgements, via the feedback association identifier ("FB AID") field 140, to previous RR frames. In these embodiments, the duration field 132 may set to a value of 0. If a station 102 does not detect its AID in the FB AID field 140, the station may transmit another RR frame in a subsequent RPI.

In accordance with a preferred embodiment of the invention, the access point 104 generates and broadcasts an RP frame 120 to one or more wireless stations 102. Upon receipt of an RP frame 120, a wireless station preferably may transmit an RR frame 126 back to the access point 104 if the station has data to transmit. If the station has no data to transmit, the station preferably does not transmit any frame during the RPI. A suitable embodiment of an RR frame 126 is depicted in Figure 5. As shown, the RR frame 126 includes fields 152-162. The frame control field 152 may be used to identify the frame as an RR frame. The association identifier ("AID") field 154 preferably contains the AID of the station 102 generating and transmitting the RR frame. The BSSID field 156 includes the address of the AP 104 that sent the RP frame 120. The traffic identifier ("TID") bitmap field 158 preferably identifies the particular traffic stream or traffic category to which the data indicated in the RR frame pertain. The FCS field 162 is used for error detection, as noted above. The requested TXOP field 160 preferably specifies the time amounts needed for the transmission of the data of the various traffic streams or traffic categories as identified in the TID bitmap field 158.

The AID in field 154 preferably is encoded in such a way that the access point 104, which receives the RR frame 126, will be informed of what station has data ready to transmit over the wireless medium. By way of example, if the IEEE 802.11-1999 standard is followed, the duration/AID field comprises 16 bits (bits 0-15). When the field is used to encode an AID, the 802.11 standard defines a reserved status for bits 0 through 13 with bits 14 and 15 set to 0 and 1, respectively. In accordance with a preferred embodiment, with bits 14 and 15 of this setting, bits 0-13 may be encoded to contain the AID value of the station sending the RR frame.

Referring again to Figures 1-4, when the RPI 124 closes, the access point may have received one or more RR frames 126. Of course, the access point may not have received any RR frames 126 indicating that no stations 102 associated with that access point 104 currently have data to transmit or that some stations 102 sent their RR frames at the same time thus resulting collision at the access point 104. The access point acknowledges receipt of the RR frames in a subsequent RP frame 120 in which the FB AID field 140 may contain the AIDs of the stations 102 that transmitted RR frames correctly received by the access point 104. Each AID may occupy two bytes (octets) and, as such, the FB AID field 140 may be of variable length depending on the number of stations to acknowledge.

When the RPI 124 completes and the access point 104 then knows which, if any, wireless stations 102 have data ready to be transmitted, the access point may proceed in accordance with any suitable manner to cause the stations to transmit data. For example, the access point 104 may request a particular station to begin transmitting its data for a specified time interval forcing all other stations that have data to hold off until the selected station finishes transmitting its data or the specified time interval elapses, whichever comes earlier. The access point then may select another station to begin transmitting its data. The access point may also send another RP frame to initiate another RPI interval for more RR frame transmissions.

It is possible that two or more RR frames may "collide" within the RPI 124. The potential for such collisions, however, is generally less than if an RPI 124 was not used to coordinate the transmission of RR frames. To reduce collision, the MAC 107 of a station 102, for example, can act in the following exemplary way to decide when to transmit an RR frame 126. In accordance with an embodiment, each station 102 generates a random number from the contention window specified in request control field 138. The random number specifies the time in which the station 102 will be able to send an RR frame 126 to the access point if the station has data to transmit. A counter (not shown) in the station counts down from its random number to 0 each time the wireless medium is free during a predetermined period of time. Once a count of 0 is reached, the station sends an RR frame. If the station has not decremented its countdown counter to 0 by the time that station could still transmit an RR frame in the remaining RPI, the station will abort its RR transmission attempt during the current RPI and disregard the residual counter value. The station may attempt to transmit an RR frame in the next RPI as announced by the access point using the procedure described above. Stations 102 generate their random numbers independently, thereby randomizing their RR frame transmission times and reducing the collision likelihood. The access point 104 chooses the contention window value for each RPI to optimize access by wireless stations in their RR frame transmissions.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A wireless network, comprising:
a plurality of wireless stations; and
an access point to which the wireless stations wirelessly communicate, wherein said access point specifies a time interval during which any of the wireless stations that have data to send may inform the access point whether the station has data to transmit.

2. The wireless network of claim 1, wherein said access point generates a first frame which contains an interval field, said interval field specifying a time duration of said time interval.

3. The wireless network of claim 2, wherein said interval field encodes a number of microseconds corresponding to the time duration of the time interval.

4. The wireless network of any one of claims 1 to 3, wherein wireless stations having data to send transmit second frames during said time interval indicating traffic categories or traffic streams the data belongs to and the time amounts needed to transmit said data.

5. The wireless network of any one of claims 1 to 4, wherein said access point grants a transmission time to each wireless station that has informed the access point of data that is ready to transmit, when said access point is ready for a wireless station to transmit its data.

6. The wireless network of any one of claims 2 to 5, wherein said first frame includes a value that is used by each of said wireless stations having data for transmission to derive a random number, said random number is used by a wireless station to determine whether and when to transmit a second frame in said time interval to said access point.

7. A method associated with a wireless network comprising an access point and a plurality of wireless stations, comprising:
(a) receiving a first frame which defines a time interval during which those of said wireless stations having data to send may inform the access point of the traffic categories or traffic streams the data belongs to and the time amounts needed to transmit said data; and
(b) transmitting one or more second frames from said wireless stations having data to send during said time interval, each of said second frames indicating the traffic categories or traffic streams the data belongs to and the time amounts needed to transmit said data.

8. The method of claim 7 wherein said first frame includes an interval field, said interval field specifying a time duration of said time interval.

9. The method of claim 7 or 8, wherein said first frame includes a contention window from which a wireless station having data to send determines whether and when to transmit a second frame in said time interval.

10. The method of any one of claims 7 to 9, wherein said first frame includes a feedback encoded to identify those of the wireless stations from which said access point previously received said second frame.
